# EUROPEAN PATENT APPLICATION

(11) **EP 1 936 892 A1**
(43) Date of publication of application: **25.06.2008**
(21) Application number: 06791210.5
(22) Date of filing: 08.10.2006
(51) Int. Cl.: H04L 12/58

(54) **A SYSTEM FOR CONTROLLING THE SECURITY OF NETWORK AND A METHOD THEREOF**

(30) Priority: 15.10.2005 CN 200510100417; 19.10.2005 CN 200510109209; 07.11.2005 CN 200510115574
(71) Applicant: Huawei Technologies Co., Ltd., Shenzhen, Guangdong Province 518129 (CN)
(72) Inventor: WEI, Jiwei, Guangdong Province 518129 (CN); ZHENG, Zhibin, Guangdong Province 518129 (CN); LIU, Shuling, Guangdong Province 518129 (CN)
(74) Representative: Epping - Hermann - Fischer
(86) International application number: PCT/CN2006/002628
(87) International publication number: WO 2007/045150

(57) **Abstract**

A system for controlling the security of network and the method thereof, are general applied in the network security field. The server at the network side receives the local security information collected and reported by the terminal device, analyzes the plurality of the security information, determines the security policy based on the analyzed result. Because the linkage between the network side and the terminal side is realized and the security policy is draw based on the information from the terminal device, thereby the threat of security from the terminal device may be confront at the source. The present invention may consider the more information sources when drawing the security policy; therefore the security policy may be more proper and exact. Furthermore the difference security service is provided, which is corresponded to the terminal device of the different user levels. Moreover, the present invention also provides the protection from the Spam based on the linkage between the terminal and server.

## Description

### Field of the Invention

The present invention relates to network security technologies, and more particularly, to a method and system for security control in a wireless data network.

### Background of the Invention

With the application of wireless data networks, more and more people begin to enjoy the network services using mobile terminals. The security mechanisms in the existing 3rd Generation Partnership Project (3GPP), Wireless Local Area Network (WLAN), Worldwide Interoperability Microwave Access (WiMAX), etc., can ensure the authentication of subscriber access and the security in traffic transmission, but may incur endless threats against security from the application layer (such as viruses, attacks from hackers, embezzlement of subscriber information, etc.) due to the openness and the security loopholes of the application service provider and the Internet Protocol (IP) network per se, which can not be dealt with by the existing security mechanisms in wireless data networks.

In the existing security mechanisms, security aiding devices, such as firewalls, invasion monitoring systems, are used to make security responses to threats such as hacker attacks, virus invasion, etc., by way of network flow filtering, application protocol analysis or security event early-warning, etc, in order to implement security protection of the network. For example, when a virus invades in or a worm is spreading, the generally used methods are disconnecting the server infected with the virus or limiting the services provided for all subscribers. Since the security protection is implemented mainly at the network side in the prior art, in the case that a mobile terminal is infected with a virus, the terminal system has a security loophole, or the security configuration information of the terminal system is tampered with, the network can not make a response immediately, such as performing proper security control in the case of the above situations at the mobile terminal side, therefore not only the terminal can not be modified immediately, but the security performance of the whole network would be affected.

### Summary of the Invention

Embodiments of the present invention provide a method and system for network security control, in which a response to the security correlation information from the terminal side can be made such that the security performance of the system is improved.

Based on the above, in the embodiments of the present invention, differential security protection may be implemented among different subscribers.

According to an aspect of the present invention, a method for network security control includes:

collecting, by terminal devices, local security correlation information and reporting the same to a server;

receiving and parsing, by the server, the security correlation information, and obtaining a security strategy corresponding to the result of the parsing;

performing, by the server, network access control and/or service access control on a terminal device via a network access device by using the security strategy.

Optionally, the method further includes: transmitting, by the server, to a security device within the network the security correlation information reported by the terminal devices, and making, by the security device, a security response according to the security correlation information so as to implement security protection of the network.

Optionally, the collecting local security correlation information includes: collecting local security configuration information and/or security event information.

Optionally, when the security correlation information collected by a terminal device contains the security event information, the terminal device filters the security event information as collected according to preconfigured filtering rules and reports the remaining security event information after the filtering to the server.

Optionally, the security configuration information includes system security configuration information and application security configuration information; and the security event information includes virus event information, attack event information and illegal scan information.

Optionally, the server receives the security correlation information in an interruption or inquiry way.

Optionally, the method further includes: providing, by the server, a security service for a terminal device based on the security strategy.

Optionally, the providing a security service includes: performing security attack processing, performing security configuration updating or providing a security report.

Optionally, the receiving and parsing the security correlation information includes: making a comprehensive analysis on the security correlation information reported by at least two terminal devices.

Optionally, the obtaining a security strategy corresponding to the result of the parsing includes: determining a security strategy corresponding to each terminal device in combination with the security service level of security service subscribed to by a subscriber.

According to another aspect of the present invention, a system for network security control includes terminal devices, a network access device connected therewith, and a security correlation server connected with the network access device, and further includes:

security correlation agents provided at the terminal device side, for collecting security correlation information of the terminal devices and reporting the same to the security correlation server;

the security correlation server is for receiving and parsing the security correlation information reported by the security correlation agents, obtaining a security strategy corresponding to the result of the parsing, and performing network access control and/or application service access control on a terminal device via the network access device by using the security strategy.

Optionally, the security correlation server parses the security correlation information reported by the security correlation agents, by making a comprehensive analysis on the security correlation information reported by the security correlation agents of at least two terminal devices.

Optionally, the system further includes:

a security device connected with the security correlation server, for obtaining the security correlation information from the security correlation server, making a corresponding security response and implementing security protection of the network.

Optionally, the security correlation agent includes:

a configuration information obtaining subunit for collecting and transmitting security configuration information of the terminal device to the security correlation server.

Optionally, the security configuration information collected by the configuration information obtaining subunit includes system security configuration information and application security configuration information.

Optionally, the security correlation agent further includes:

an event information obtaining subunit for collecting security event information of the terminal device;

an event information filtering subunit connected with the event information obtaining subunit, for filtering the security event information as collected according to preconfigured filtering rules and reporting the remaining security event information after the filtering to the security correlation server.

Optionally, the security correlation agent includes:

an event information obtaining subunit for collecting security event information of the terminal device;

an event information filtering subunit connected with the event information obtaining subunit, for filtering the security event information as collected according to preconfigured filtering rules and reporting the remaining security event information after the filtering to the security correlation server.

Optionally, the security correlation information collected by the event information obtaining subunit includes virus event information, attack event information and illegal scan information.

Optionally, the security correlation agent is a functional module provided within the terminal device, or an independent functional entity in the system.

Optionally, the security correlation server includes a database recording the security service level of a security service subscribed to by a subscriber; the security correlation server obtaining a security strategy corresponding to the result of the parsing is determining a security strategy corresponding to each terminal device in combination with the security service level of a security service subscribed to by a subscriber.

Optionally, the security correlation server and the security correlation agent provide a security service for a terminal device based on the security strategy corresponding to each terminal device.

Optionally, the security service includes security attack processing, security configuration updating or a security report.

According to still another aspect of the present invention, a method for preventing junk mails includes:

reporting, by a client, the configuration information of a received junk mail to an associated server;

receiving and parsing, by the server, the configuration information, and establishing a junk mail filtering strategy according to the result of the parsing;

filtering out, by the server, a junk mail received from the network according to the filtering strategy.

Optionally, the reporting the configuration information of a received junk mail to an associated server includes: reporting at least one of the source address/destination address, a key word of the subject and a key word of the content of the junk mail to the associated server.

Optionally, the server receives the configuration information in an interruption or inquiry way.

Optionally, the method further includes: updating, by the server, the junk mail filtering strategy in real time according to the configuration information of the junk mail reported by the client.

According to still another aspect of the present invention, a system for preventing junk mails includes a mail server and at least one client connected with the mail server via a network access device, and further includes:

a configuration information obtaining unit provided in the client, for obtaining and transmitting configuration information of a junk mail received by the client;

a security correlation server connected with the network access device, for receiving and storing the configuration information transmitted from the configuration information obtaining unit, establishing or updating a junk mail filtering strategy according to the configuration information, and controlling the network access device to filter out a junk mail received from the network by the mail server according to the filtering strategy.

Optionally, the security correlation server includes:

a configuration information storing unit, for receiving and storing the configuration information transmitted from the configuration information obtaining unit;

a configuration information processing unit connected with the configuration information storing unit, for obtaining the configuration information from the configuration information storing unit, establishing or updating a junk mail filtering strategy according to the configuration information, and controlling the network access device to filter out a junk mail received from the network by the mail server according to the filtering strategy.

Optionally, the configuration information storing unit receives the configuration information of a junk mail from the configuration information obtaining unit in an interruption or inquiry way;

the configuration information processing unit reads the configuration information of a junk mail from the configuration information storing unit in an interruption or inquiry way.

Optionally, the system further includes:

a mail detecting unit connected with the configuration information obtaining unit, for detecting the mails received by the client and identifying a junk mail therefrom.

Optionally, the mail detecting unit is provided within the client, or is an independent entity in the system.

According to still another aspect of the present invention, a system for preventing junk mails includes a mail server and at least one client connected with the mail server via a network access device, and further includes:

a configuration information obtaining unit provided in the client, for obtaining and transmitting configuration information of a junk mail received by the client;

a security correlation server connected with the network access device, for receiving and storing the configuration information of the junk mail transmitted from the configuration information obtaining unit;

a mail filtering unit connected with the security correlation server, for establishing or updating a junk mail filtering strategy according to the configuration information of the junk mail outputted by the security correlation server, and filtering out a junk mails received from the network according to the filtering strategy.

Optionally, the mail filtering unit is provided in the mail server or connected with the mail server via a communication interface.

Optionally, the mail filtering unit is connected between the mail server and an Internet router.

Optionally, the client includes:

a mail detecting unit connected with the configuration information obtaining unit, for detecting the mails received by the client and identifying a junk mail therefrom.

Optionally, the mail detecting unit is provided within the client, or is an independent entity in the system.

Optionally, the security correlation server obtains the configuration information of a junk mail from the configuration information obtaining unit in an interruption or inquiry way;

the mail filtering unit obtains the configuration information of a junk mail from the security correlation server in an interruption or inquiry way.

In the methods and systems for network security control according to embodiments of the present invention, a terminal device collects and reports local security correlation information to an associated server, and the server analyzes the security correlation information of the terminal device and obtains a corresponding security strategy, and performs network access control and application service access control on the terminal device via a network access device by using the security strategy. Since the security strategy is established according to the security correlation information from the terminal device side with such a correlative reacting mechanism, an immediate response can be made so that the security performance of the network can be improved.

In a preferred embodiment of the present invention, the server obtains a security strategy based on a comprehensive analysis on the security correlation information reported by at least two terminal devices, i.e., the security strategy is established by analyzing comprehensively the security correlation information reported by a plurality of terminal devices; therefore the obtained security strategy is relative perfect in terms of reasonability.

In the methods and systems for preventing junk mails according to embodiments of the present invention, the junk mail filtering rules are established by using the configuration information of a junk mail transmitted from a client to an associated server, and the received mails are filtered with the filtering rules so as to filter out a junk mail therefrom. Since such correlative reacting is implemented between the server and the client, and the configuration information of junk mails comes directly from a large number of clients, it is ensured that the configuration information is true and valid and the samples are sufficient such that the server can establish reasonable junk mail filtering rules with which the spread of junk mails can be prevented more completely and accurately.

In another embodiment of the present invention, the security correlation information collected by the terminal device includes security event information, in addition to security configuration information, such that the server can obtain more significant information from each terminal device, so as to establish a more accurate and reasonable security strategy.

In a further embodiment of the present invention, for a mobile network, a differential application security service can be provided for each terminal device, in which a subscriber who has subscribed to a security service of higher level can be provided with a quicker security response, an application service of higher quality and higher priority and better network resources so as to implement security upgrade; therefore the quality of an application service for a subscriber can be ensured while guaranteeing the security of the mobile network.

### Brief Description of the Drawings

Fig. 1 is a schematic diagram illustrating the networking architecture of a network security system according to an embodiment of the present invention;

Fig. 2 is a schematic diagram illustrating the correlative reacting system and an external interface thereof as shown in Fig. 1;

Fig. 3 is a schematic diagram illustrating the networking architecture according to a first embodiment of the present invention;

Fig. 4 is a flow chart illustrating the network security control according to the first embodiment of the present invention;

Fig. 5 is a schematic diagram illustrating the networking architecture according to a second embodiment of the present invention;

Fig. 6 is a flow chart illustrating the network security control according to the second embodiment of the present invention;

Fig. 7 is a schematic diagram illustrating the networking architecture according to a third embodiment of the present invention;

Fig. 8 is a flow chart illustrating the network security control according to the third embodiment of the present invention;

Fig. 9 is a schematic diagram illustrating the networking architecture according to a fourth embodiment of the present invention;

Fig. 10 is a flow chart illustrating the network security control according to the fourth embodiment of the present invention;

Fig. 11 is a schematic diagram illustrating the networking architecture according to a fifth embodiment of the present invention;

Fig. 12 is a flow chart illustrating the network security control according to the fifth embodiment of the present invention;

Fig. 13 is a schematic diagram illustrating the networking architecture according to a sixth embodiment of the present invention;

Fig. 14 is a flow chart illustrating the network security control according to the sixth embodiment of the present invention;

Fig. 15 is a flow chart of establishing a security strategy according to the security level of a subscriber according to an embodiment of the present invention;

Fig. 16 is a schematic diagram illustrating the networking architecture according to a first embodiment of the system for preventing junk mails in the present invention;

Fig. 17 is a flow chart illustrating a first embodiment of the method for preventing junk mails in the present invention;

Fig. 18 is a schematic diagram illustrating the networking architecture according to a second embodiment of the system for preventing junk mails in the present invention;

Fig. 19 is a flow chart illustrating a second embodiment of the method for preventing junk mails in the present invention;

Fig. 20 is a schematic diagram illustrating the networking architecture according to a third embodiment of the system for preventing junk mails in the present invention; and

Fig. 21 is a flow chart illustrating a third embodiment of the method for preventing junk mails in the present invention.

### Detailed Description of the Embodiments

In embodiments of the present invention, network security control is implemented based on a Correlative Reacting System (CRS) of a wireless data network.

A Correlative Reacting System is a system for depressing threats against security to a wireless data network by controlling access of an insecure mobile terminal (i.e., a mobile terminal which does not conform to a security strategy established for the network, for example, a mobile terminal with a security loophole or infected with a virus), the essence of which is to control the network access of a mobile terminal and limit the application service access of a mobile terminal by correlative reacting between the mobile terminal and the network side, so as to provide the network with abilities to resist threats against security, such as viruses, attacks to the network, etc.

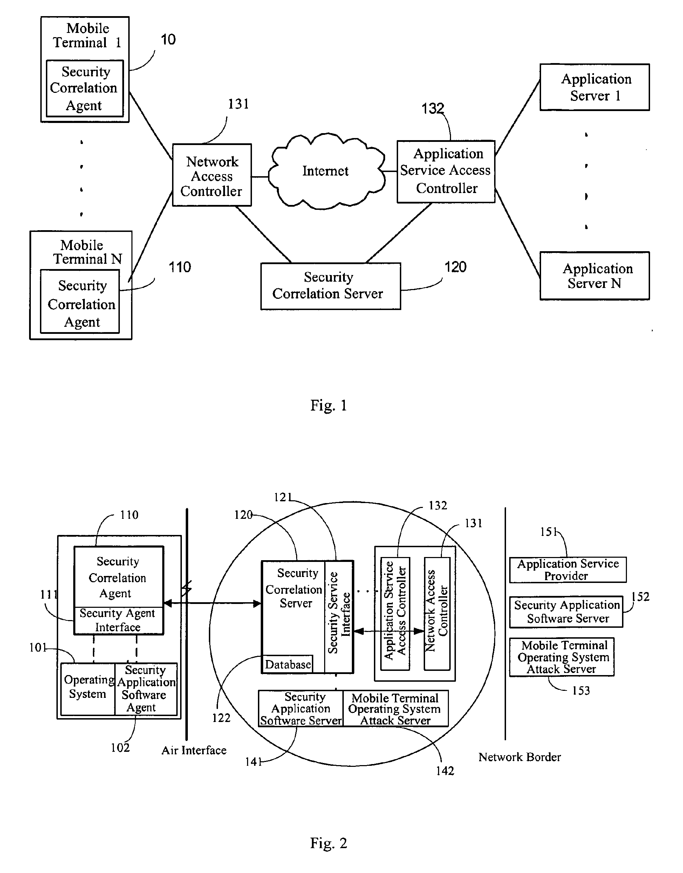

Fig. 1 shows a schematic diagram illustrating the networking architecture of a Correlative Reacting System, which mainly includes security correlation agents 110 at the mobile terminal side, a security correlation server 120 at the network side, network access devices (such as a network access controller 131 and an application service access controller 132) associated with security correlation servers. The security correlation agent 110 and the security correlation server 120 exchange information with each other via a correlative reacting protocol and constitute the core of the Correlative Reacting System.

The security correlation agent 110 is used to collect security correlation information from the mobile terminal 10, conduct a preliminary process and organization on the information and report the same to the security correlation server 120. The security correlation agent 110 also receives security update commands and instructions from the security correlation server 120, so as to report the security correlation information of the mobile terminal to the subscriber as well as provide the mobile terminal 10 with necessary information and cooperation for assisting in repairing an insecure mobile terminal.

The security correlation server 120 is used to obtain security correlation information of mobile terminals 10 from the security correlation agent 110, control the network access and application service access of a mobile terminal 10 with a corresponding preconfigured security strategy according to the security correlation information of the mobile terminal 10, and cooperate with associated network devices assist in security updating of the mobile terminal 10.

The so-called security strategy is a sum of precautions defined for various specific threats against security by the Correlative Reacting System according to the overall security requirements of the network, which mainly includes a network access control strategy and an application service access control strategy.

The network access control strategy means that the security correlation server 120 limits the total data flow when a mobile terminal 10 accessing a network through correlative reacting with the network access controller 131 by using technical means such as flow control, access limiting, Quality of Service (QoS) reconfiguration, etc., so as to prevent an insecure mobile terminal (for example, a mobile terminal with a security loophole or infected with a virus) from occupying network resources inappropriately and prevent a vicious virus from spreading within the network. In addition, for the accessing to an insecure external Application Service Provider (ASP), the security correlation server 120 can also perform a flow blocking based on the network layer through correlative reacting with the network access controller 131 (for example, a network border gateway).

Flow limiting is to limit the up/down flow of an insecure mobile terminal or ASP below a certain predetermined value. An extended control method, such as accurate bandwidth shaping, may also be provided according to the capability of a correlative reacting device at the network side. Flow limiting can prevent a virus from bursting out on a large scale so as to avoid quick breakdown of the operating network, although it can not prevent the virus from spreading to the network on a large scale.

Interdiction is to interdict an insecure mobile terminal or ASP directly so as to forbid its access to the network.

In addition, redirection may also be performed. Redirection means to redirect, by the network access controller 131, a specific flow of an insecure mobile terminal or ASP to another special network security device for further processing. For example, in order not to have an effect on a subscriber's normal access to the Internet, all up flows of the subscriber may be redirected to an anti-virus gateway to clear the subscriber's messages infected with a worm virus and forward the subscriber's normal messages. According to the capability of a correlative reacting device at the network side, a redirection function based on a flow stream analysis of protocols and states may be provided.

The application service access control strategy means that the security correlation server 120 performs service access control on the mobile terminal 10 based on the application layer through correlative reacting with the application service access controller 132. The application service access control is mainly to limit available services for the mobile terminal so as to ensure that only necessary services are run on the mobile terminal and the system. Depending upon the types of services, methods for implementing service access control are different.

In addition, the security correlation agent 110 at the terminal side can cooperate with the mobile terminal 10 such that the subscriber can not initiate a disabled service so as to further save the network resources.

In order to resist threats against network security caused by an insecure mobile terminal, it is necessary and advantageous to provide means for multi-layer security control, for example, from network access control to application service control. The network access control and the application service control can complement each other. The network access control can compensate for the limitation in the application service control so as to control effectively risks in security based on complex mechanisms, such as a network worm, a hacker attack, etc. On the other hand, application service control can prevent, from the beginning, an impact on network flow caused by an attack to a specific service, so as to prevent effectively a virus from spreading within the network.

Based on the above, in an embodiment of the Correlative Reacting System of the present invention, to determine a security strategy, security correlation information of a plurality of mobile terminals within the network is taken into account comprehensively, instead of that of a single mobile terminal, to implement security control, such that more information can be obtained and diverse information sources can be utilized. A security strategy determined with such a method is of good accuracy and reasonability in network access control and application service access limiting of the mobile terminal.

In implementation of embodiments of the present invention, the wireless data network may be of, but not limited to, Wideband Code Division Multiple Access (WCDMA) or CDMA2000, the mobile terminal may be, but not limited to, a mobile phone or a Personal Digital Assistant (PDA) connected and communicating with the network via the air interface.

In connection with Fig. 2, the Correlative Reacting System communicates with external components via correlative reacting service interfaces, such as a security agent external interface 111 of the security correlation agent 110 at the terminal side and a security service external interface 121 of the security correlation server 120 at the network side.

The security correlation agent 110 is connected with an operating system 101 and a Security Application Software Agent (SAS-A) 102 of the terminal via the security agent external interface 111. The security correlation server 120 is connected with a Security Application Software Server (SAS-S) 141 and a Terminal Operating System Vulnerability Server (TOS-S) 142 via the security service external interface 121.

The security correlation server 120 is further connected with an ASP 151, an SAS-S 152 and a TOS-S 153 in an external network.

There is a database 122 in the security correlation server 120, for storing correlative reacting information and selective service description for subscribers, and providing changeless subscriber information necessary for correlative reacting service as well as information such as that on dynamic subscriber security states, service conditions, etc.

For better understanding of the present invention, descriptions thereof will be given below in further detail.

### Embodiment 1

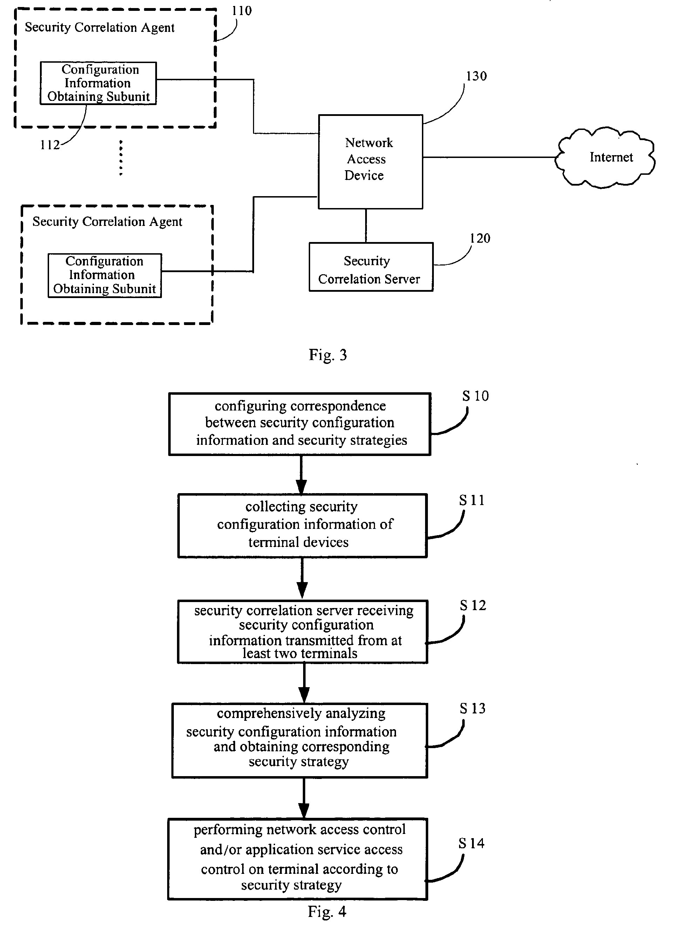

Fig. 3 shows a schematic diagram illustrating the networking architecture according to a first embodiment of the present invention. The Correlative Reacting System includes security correlation agents 110 provided at the terminal device side, and a security correlation server 120 provided at the network side, connected with terminal devices through a network access device 130.

The security correlation agent 110 may be a functional module provided within the terminal device or an independent functional entity in the system. The security correlation agent 110 includes a configuration information obtaining subunit 112 for collecting security configuration information of the terminal device.

The security correlation server 120 has stored therein correspondence between security configuration information and pre-established security strategies which are determined by taking into account security configuration information of a plurality of terminal devices within the network comprehensively. The security correlation server 120 receives the security configuration information transmitted from the security correlation agents 110, in an interruption or inquiry way, determines a matched security strategy by analyzing and judging comprehensively the security configuration information reported by at least two terminal devices, and with this security strategy, performs network access control and/or application service access control on a terminal device via the network access device 130.

Fig. 4 is a flow chart illustrating the network security control according to the first embodiment of the present invention, the main implementation process of which is as follows.

In step S10, correspondence between security configuration information and security strategies are configured on the security correlation server.

For example, the security correlation server may detect that the terminal devices, the number of which is greater than or equal to a set number, have reported security configuration information tampered with due to an illegal scan event applied to the terminal devices. To prevent other terminals within the network from suffering from the same illegal scan event, a security strategy corresponding to the above security configuration information is configured on the security correlation server, so as to provide all the terminal devices with an operating system patch for the illegal scan event, and interdict the terminal devices of which the security configuration information has been tampered with and permit their access only after the patch has been installed.

In step S11, security configuration information of the terminal devices is collected.

The configuration information obtaining subunit in the security correlation agent provided at the terminal device side collects security configuration information of the terminal device, via a communication interface with the operating system and routine application software of the terminal device, which mainly includes system configuration information and application configuration information.

In step S12, the security correlation server receives the security configuration information transmitted from at least two terminal devices in an interruption or inquiry way.

In step S13, the security correlation server performs a comprehensive analysis on the received security configuration information of the terminal devices, and determines a corresponding security strategy according to the correspondence between security configuration information and security strategies as configured in step S10, which includes a network access strategy and/or an application service access strategy.

The network access strategy includes:

flow limiting: limiting the up/down flow of an insecure terminal device below a certain predetermined value;

interdiction: interdicting an insecure terminal device directly, so as to forbid its access to the network;

redirection: redirecting, by the network access device, a specific flow of an insecure terminal device to another special network device for further processing. For example, in order not to have an effect on the normal access of a terminal device to the Internet, all up flows of the terminal device may be redirected to an anti-virus gateway to clear the messages of the terminal device infected with a worm virus and forward the subscriber's normal messages.

In the application service access strategy, available services for a terminal device are limited or disabled.

In step S14, the security correlation server performs network access control and/or application service access control on a terminal device via the network access device by using the security strategy as determined.

In this embodiment, a security strategy is determined in the security correlation server by analyzing comprehensively the security configuration information reported by a plurality of terminal devices such that the security strategy as determined is relative perfect in reasonability.

### Embodiment 2

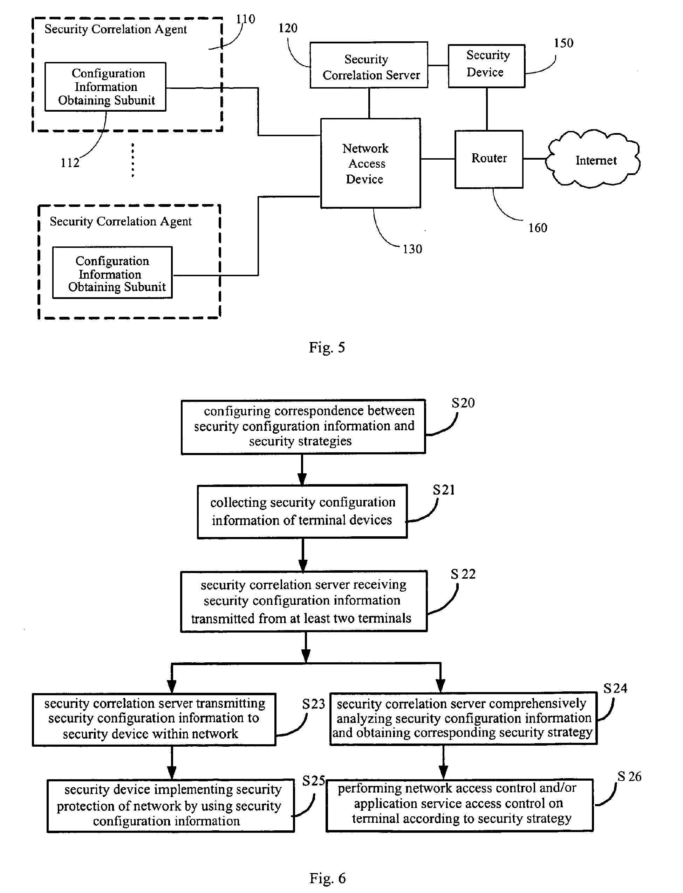

Fig. 5 shows a schematic diagram illustrating the networking architecture according to a second embodiment of the present invention. Compared with the first embodiment, a security device 150 connected with the security correlation server 120 is added at the network side in the present embodiment.

In this embodiment, the security correlation server 120 can transmit the security configuration information reported by the terminal devices to the security device 150 within the network, such as a firewall, an invasion monitoring device, an operation maintenance management center, etc., which makes a corresponding security response through network flow filtering, application protocol analysis, security event early-warning or the like according to the received security correlation information, in order to implement security protection of the mobile network.

In this embodiment, the security device 150 implements security protection of the mobile network by controlling a router 160.

Fig. 6 is a flow chart illustrating the network security control according to the second embodiment of the present invention, the main implementation process of which is as follows.

Steps S20 to S22 are similar to steps S10 to S12 in the first embodiment.

The security correlation server performs step S23 and step S24 after step S22.

In step S23, the security correlation server transmits the security configuration information reported by the terminal devices to a security device within the network, such as a firewall, an invasion monitoring device, an operation maintenance management center, etc. Then go to step S25.

In step S25, the security device within the network makes a corresponding security response through network flow filtering, application protocol analysis, security event early-warning or the like according to the received security correlation information, so as to implement security protection of the mobile network.

In step S24, the security correlation server performs a comprehensive analysis on the received security configuration information of the terminal devices, and determines a corresponding security strategy according to the correspondence between security configuration information and security strategies as configured in step S20, which includes a network access strategy and/or an application service access strategy. Then go to step S26.

In step S26, the security correlation server performs network access control and/or application service access control on a terminal device via the network access device by using the security strategy as determined.

Compared with the first embodiment, a security device is added at the network side in the present embodiment, which can receive the security configuration information transmitted from the security correlation server and make a corresponding security response through network flow filtering, application protocol analysis, security event early-warning or the like according to the received security configuration information, so as to implement security protection of the mobile network more effectively.

### Embodiment 3

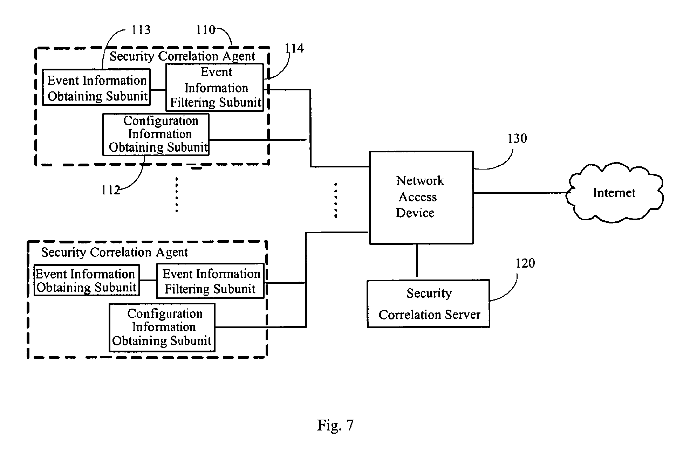

Fig. 7 shows a schematic diagram illustrating the networking architecture according to a third embodiment of the present invention. The system includes security correlation agents 110 provided at the terminal device side and a security correlation server 120 provided at the network side, connected with terminal devices through a network access device 130.

The security correlation agent 110 includes an event information obtaining subunit 113, an event information filtering subunit 114 and a configuration information obtaining subunit 112, wherein the event information obtaining subunit 113 is used to collect security event information of the terminal device; the event information filtering subunit 114 is connected with the event information obtaining subunit 113 and used to filter the security event information as collected according to preconfigured event information filtering rules and transmit the remaining security event information after the filtering to the security correlation server 120 via the network access device 130; and the configuration information obtaining subunit 112 is used to collect and transmit security configuration information of the terminal device to the security correlation server 120.

The security correlation server 120 has stored therein correspondence between security event information and security configuration information and pre-established security strategies. The security correlation server 120 receives the security event information and the security configuration information transmitted from the security correlation agents 110, in an interruption or inquiry way, determines a matched security strategy by analyzing and judging comprehensively the security event information and the security configuration information reported by at least two terminal devices, and with this security strategy, performs network access control and application service access control on a terminal device via the network access device 130.

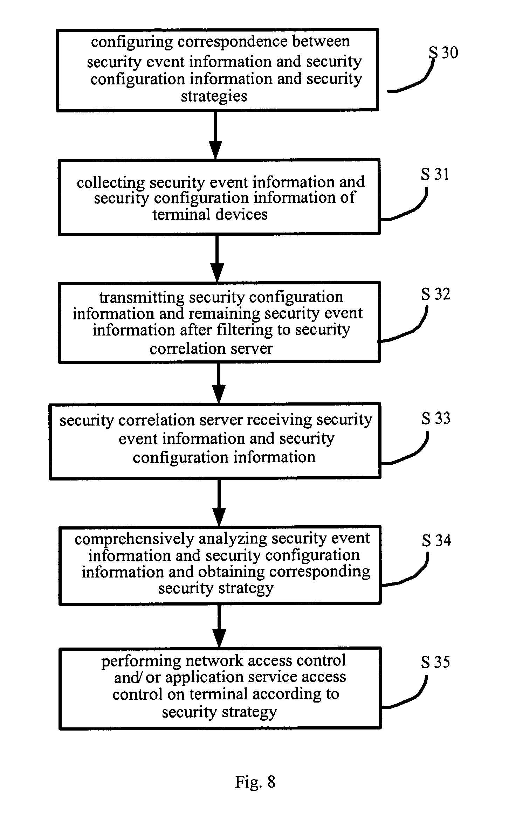

Fig. 8 is a flow chart illustrating the network security control according to the third embodiment of the present invention, the main implementation process of which is as follows.

In step S30, correspondence between security event information and security configuration information and security strategies are configured on the security correlation server.

For example, when the security correlation server receives same or similar security event information (such as a virus event, an illegal scan event, etc.) reported by the terminal devices, the number of which is greater than or equal to a set number, since the network may be paralyzed if many terminal devices suffer the same or similar security event, a security strategy may be configured so as to interdict the terminal devices which have reported the security event information, and refer to the security configuration information reported by the terminal devices to perform security update on a terminal device in which a security patch for the above reported security event has not been installed.

In step S31, security configuration information and security event information of the terminal devices is collected.

The configuration information obtaining subunit in the security correlation agent provided at the terminal device side collects security configuration information of the terminal device, via a communication interface with the operating system and routine application software of the terminal device, which mainly includes system configuration information and application configuration information.

The event information obtaining subunit in the security correlation agent collects security event information of the terminal devices via a communication interface with the security application software (such as firewall software, virus killing software, loophole scan software, invasion detecting software and the like) on the terminal device, which mainly includes a virus event, an attack event, an illegal scan event, etc.

In step S32, the event information filtering subunit in the security correlation agent filters the security event information as collected according to preconfigured filtering rules, and transmits the remaining key security event information after the filtering to the security correlation server via the network access device; the configuration information obtaining subunit transmits the security configuration information to the security correlation server.

Since there is too much security event information of the terminal devices, the amount of information to be transported will be very large without filtering; an event information filtering subunit is thus provided in the security correlation agent to filter the security event information as collected according to preconfigured filtering rules, so as to form the key security event information which is of importance and for which the amount of information to be transported is not too large. For example, a threshold number of scanned ports may be set for illegal scan event information; if the number of scanned ports is greater than 5, the scan is considered to be a key security event. This is one of the filtering rules, and different filtering rules may be configured for different security application software.

In step S33, the security correlation server receives the key security event information transmitted from the event information filtering subunit and the security configuration information transmitted from the configuration information obtaining subunit in an interruption or inquiry way.

In step S34, the security correlation server performs a comprehensive analysis on the received security configuration information and security event information of the terminal devices, and determines a corresponding security strategy according to the correspondence between security configuration information and security event information and security strategies as configured in step S30, which includes a network access strategy and/or an application service access strategy.

In step S35, the security correlation server performs network access control and/or application service access control on a terminal device via the network access device by using the security strategy as determined.

In this embodiment, the terminal devices provide the security correlation server with both the key security event information and the security configuration information such that the security correlation server can obtain more valid information from each terminal device and thus determine a more accurate and reasonable security strategy, compared with the first embodiment.

### Embodiment 4

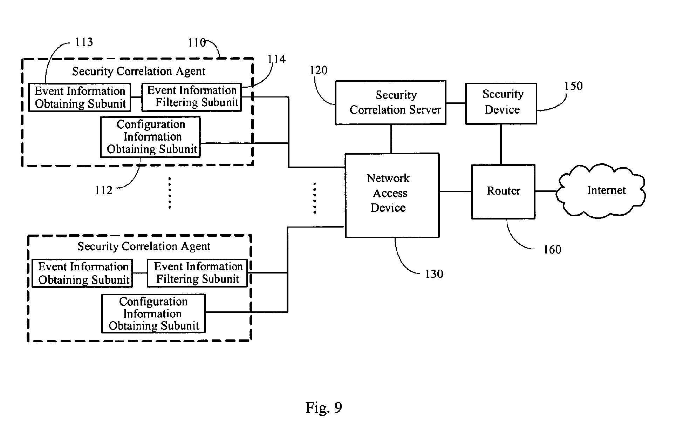

Fig. 9 shows a schematic diagram illustrating the networking architecture according to a fourth embodiment of the present invention. Compared with the third embodiment, a security device 150 connected with the security correlation server 120 is added at the network side in the present embodiment.

In this embodiment, the security correlation server 120 can transmit the security configuration information and the security event information reported by the terminal device to the security device 150 within the network, such as a firewall, an invasion monitoring device, an operation maintenance management center, etc., which makes a corresponding security response through network flow filtering, application protocol analysis, security event early-warning or the like according to the received security correlation information, in order to implement security protection of the mobile network.

In this embodiment, the security device 150 implements security protection of the mobile network by controlling a router 160.

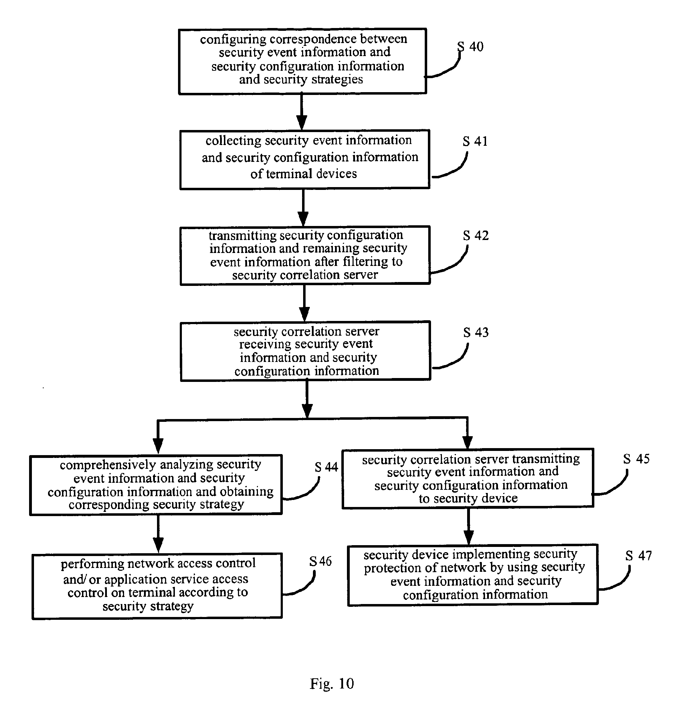

Fig. 10 is a flow chart illustrating the network security control according to the fourth embodiment of the present invention, the main implementation process of which is as follows.

Steps S40 to S43 are similar to steps S30 to S33 in the third embodiment.

The security correlation server performs step S44 and step S45 after step S43.

In step S44, the security correlation server performs a comprehensive analysis on the received security configuration information and security event information of the terminal devices, and determines a corresponding security strategy according to the correspondence between security configuration information and security event information and security strategies as configured in step S40, which includes a network access strategy and/or an application service access strategy. Then go to step S46.

In step S46, the security correlation server performs network access control and/or application service access control on a terminal device via the network access device by using the security strategy as determined.

In step S45, the security correlation server transmits the security configuration information and security event information reported by the terminal device to a security device within the network, such as a firewall, an invasion monitoring device, an operation maintenance management center, etc. Then go to step S47.

In step S47, the security device within the network makes a corresponding security response through network flow filtering, application protocol analysis, security event early-warning or the like according to the received security configuration information and security event information, so as to implement security protection of the mobile network.

Compared with the third embodiment, a security device is added at the network side in the present embodiment, which can receive the security configuration information and the security event information transmitted from the security correlation server and make a corresponding security response through network flow filtering, application protocol analysis, security event early-warning or the like according to the received security configuration information and security event information, so as to implement security protection of the mobile network more effectively.

### Embodiment 5

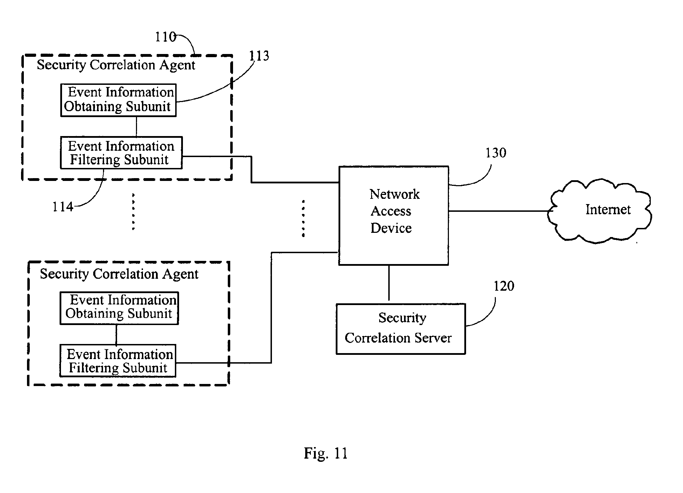

Fig. 11 shows a schematic diagram illustrating the networking architecture according to a fifth embodiment of the present invention. The system includes security correlation agents 110 provided at the terminal device side and a security correlation server 120 provided at the network side, connected with terminal devices through a network access device 130.

The security correlation agent 110 may be a functional module provided within the terminal device or an independent functional entity in the system. The security correlation agent 110 includes an event information obtaining subunit 113 and an event information filtering subunit 114, wherein the event information obtaining subunit 113 is used to collect security event information of the terminal device; and the event information filtering subunit 114 is connected with the event information obtaining subunit 113 and used to filter the security event information as collected according to preconfigured information filtering rules and transmit the remaining security event information after the filtering to the security correlation server 120 via the network access device 130.

The security correlation server 120 has stored therein correspondence between security event information and pre-established security strategies. The security correlation server 120 receives the security event information transmitted from the security correlation agent 110, in an interruption or inquiry way, determines a matched security strategy by analyzing and judging comprehensively the security event information reported by at least two terminal devices, and with this security strategy, performs network access control and application service access control on a terminal device via the network access device.

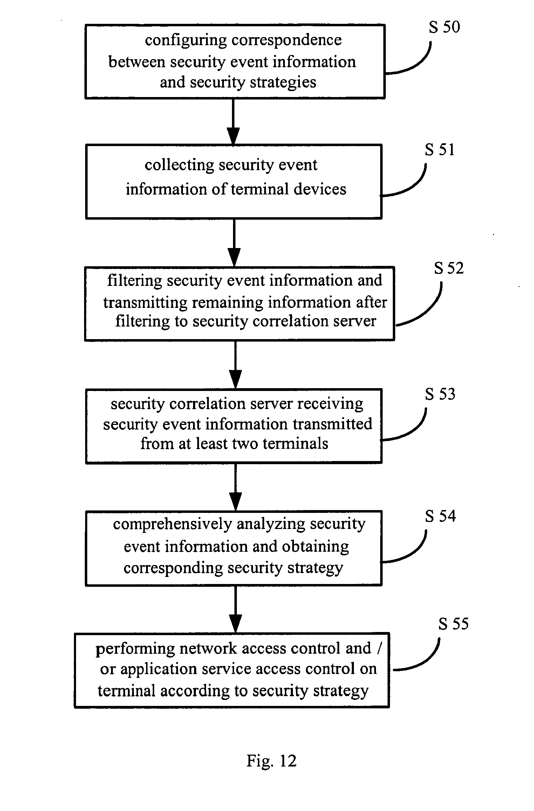

Fig. 12 is a flow chart illustrating the network security control according to the fifth embodiment of the present invention, the main implementation process of which is as follows.

In step S50, correspondence between security event information and security strategies are configured on the security correlation server.

For example, when the security correlation server receives same or similar security event information (such as a virus event, an illegal scan event, etc.) reported by the terminal devices, the number of which is greater than or equal to a set number, since the network may be paralyzed if many terminal devices suffer the same or similar security event, a security strategy may be configured so as to interdict the terminal devices which have reported the security event information when the number of the terminal devices is greater than or equal to a set number, and perform flow control on other terminal devices within the network.

In step S51, security event information of the terminal devices is collected.

The event information obtaining subunit in the security correlation agent provided at the terminal device side collects security event information of the terminal device, via a communication interface with the security application software (such as firewall software, virus killing software, loophole scan software, invasion detecting software and the like) on the terminal device, which mainly includes a virus event, an attack event, an illegal scan event, etc.

In step S52, the event information filtering subunit in the security correlation agent filters the security event information as collected according to preconfigured filtering rules, and transmits the remaining key security event information after the filtering to the security correlation server via the network access device.

In step S53, the security correlation server receives the security event information transmitted from at least two terminal devices in an interruption or inquiry way.

In step S54, the security correlation server performs a comprehensive analysis on the received security event information of the terminal devices, and determines a corresponding security strategy according to the correspondence between security event information and security strategies as configured in step S50, which includes a network access strategy and/or an application service access strategy.

In step S55, the security correlation server performs network access control and/or application service access control on a terminal device via the network access device by using the security strategy as determined.

### Embodiment 6

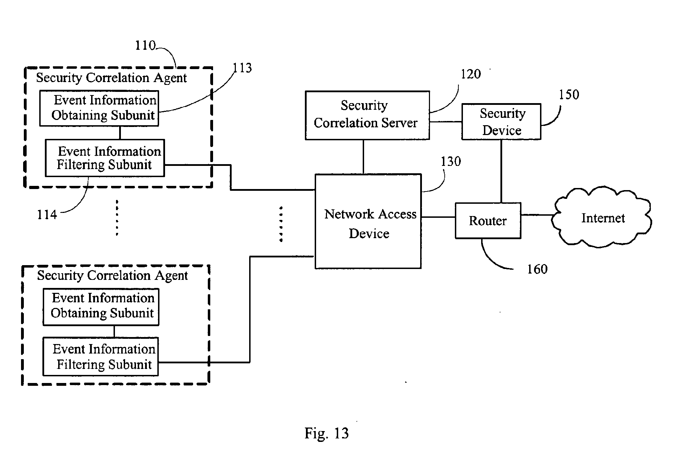

Fig. 13 shows a schematic diagram illustrating the networking architecture according to a sixth embodiment of the present invention. Compared with the fifth embodiment, a security device 150 connected with the security correlation server 120 is added at the network side in the present embodiment.

In this embodiment, the security correlation server 120 can transmit the security event information reported by the terminal device to the security device 150 within the network, such as a firewall, an invasion monitoring device, an operation maintenance management center, etc., which makes a corresponding security response through network flow filtering, application protocol analysis, security event early-warning or the like according to the received security event information, in order to implement security protection of the mobile network.

In this embodiment, the security device 150 implements security protection of the mobile network by controlling a router 160.

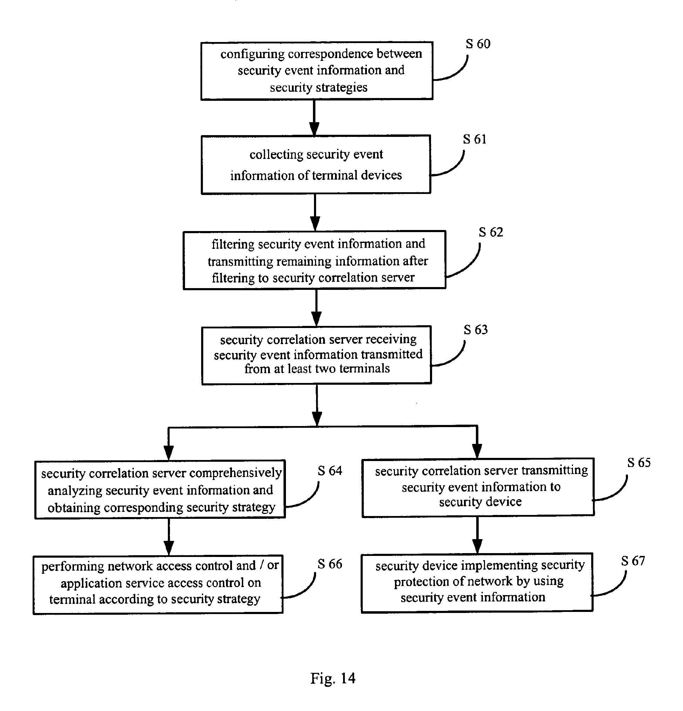

Fig. 14 is a flow chart illustrating the network security control according to the sixth embodiment of the present invention, the main implementation process of which is as follows.

Steps S60 to S63 are similar to steps S50 to S53 in the fifth embodiment.

The security correlation server performs step S64 and step S65 after step S63.

In step S64, the security correlation server performs a comprehensive analysis on the received security event information of the terminal devices, and determines a corresponding security strategy according to the correspondence between security event information and security strategies as configured in step S60, which includes a network access strategy and/or an application service access strategy. Then go to step S66.

In step S66, the security correlation server performs network access control and/or application service access control on a terminal device via the network access device by using the security strategy as determined.

In step S65, the security correlation server transmits the security event information reported by the terminal devices to a security device within the network, such as a firewall, an invasion monitoring device, an operation maintenance management center, etc. Then go to step S67.

In step S67, the security device within the network makes a corresponding security response through network flow filtering, application protocol analysis, security event early-warning or the like according to the received security event information, so as to implement security protection of the mobile network.

Compared with the fifth embodiment, a security device is added at the network side in the present embodiment, which can receive the security event information transmitted from the security correlation server and make a corresponding security response through network flow filtering, application protocol analysis, security event early-warning or the like according to the received security correlation information, so as to implement security protection of the mobile network more effectively.

Based on the above, a differential application security service can be provided for subscribers, in which different levels of security services can be provided for the subscribers, such that a subscriber who has subscribed to a security service of higher level can be provided with a quicker security response, an application service of higher quality and higher priority and more network resources so as to implement security upgrade. Specifically, in establishing and implementing a security strategy, subscribers who have subscribed to different levels of security service are further differentiated, which is necessary for the networks resources to deal with a flow impact, for example.

In an embodiment of the present invention, to pre-configure security strategies, the Correlative Reacting System establishes different security strategies for subscribers who have subscribed to different levels of security services according to an overall security strategy for the network, including network access strategies and application service control strategies. In determining and implementing a specific security strategy, different processing may be performed according to the security conditions of terminal devices and the network resources. The criterion is such that when a subscriber subscribes to a certain level of security service from the network, the higher the level is, the higher the quality of the security service provided from the network is, under the same other conditions. For example, a subscriber who has subscribed to a security service of higher level will be subject to less limitation in network access upon implementing an access service, and can get a corresponding level of security mechanism so as to ensure more secure communications.

Upon occurrence of a security event, the Correlative Reacting System maps the contents of security strategies into a set of security strategies according to the security strategies corresponding to the levels of the security services subscribed to by subscribers, in combination with the security conditions of the terminal devices and the conditions of the network resources. For example, the subscribers with the same service level and the same security conditions of the terminal devices may correspond to the same set of security strategies, according to the contents of which the Correlative Reacting System implements security control.

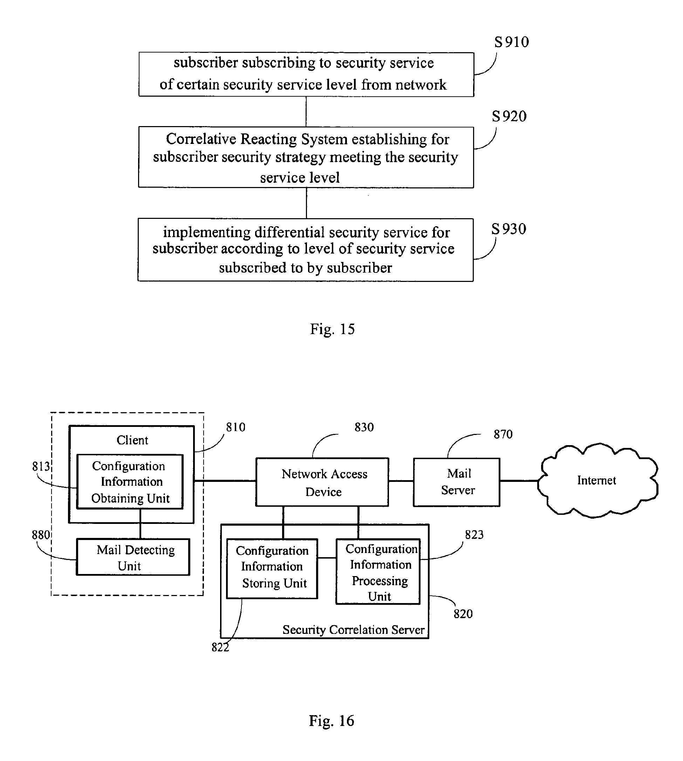

Reference is also made to Fig. 15, which is a flow chart of providing a differential security service for a subscriber according to an embodiment of the present invention.

In step S910, a subscriber subscribes to a security service of certain security service level from the network, wherein the higher the security service level is, the higher the quality of the security service provided from the network is.

In step S920, the Correlative Reacting System establishes for the subscriber a security strategy meeting the security service level according to an overall security strategy for the network, including a network access strategy and an application service control strategy.

The network access strategy includes:

flow control: providing different network bandwidth resources; wherein a possibly vicious subscriber flow is redirected preferentially to a network element with higher performance in processing, and the subscriber data packages cleared of viruses are forwarded at a higher priority; a network dedicated security channel may be provided for the subscribers where necessary; thresholds for blocking subscribers are set according to the security service levels of subscribers, where the threshold for a higher security service level is set to be higher, and a possibility for the flow thereof to be blocked is lower; thus a subscriber with a more secure security service is assigned a higher credit line.

reconfiguration of QoS parameters: the higher the level of a subscribed security service is, the less the degradation of the service due to the reconfiguration of QoS parameters is, thus fulfilling preferentially the QoS requirements of a subscriber with higher security service level.

access limiting: only a specific secure destination address or a network segment isolated from a normal network is allowed to be accessed by a subscriber. A subscriber who has subscribed to a higher level of security service may access more secure destination addresses and network segments.

Other network access strategies may be configured such that a subscriber who has subscribed to a higher level of security service is less affected.

The application service control strategy includes: a subscribed application service is not always disabled and can be provided for a subscriber who has subscribed to a higher level of security service; a service with a risk in security is limited, such as QoS parameters, an upper limit for the flow of a specific service, etc. In addition, it is possible that the service provision in rush hours is not limited for a subscriber who has subscribed to a higher level of security service. For a service provided by an ASP as a third party, the down flows into the network may be limited.

In step S930, a differential security service is implemented for the subscriber according to the level of a security service subscribed to by a subscriber in implementing the security strategy.

Descriptions are given below in terms of security attack processing, security configuration update such as virus library upgrade and system loophole upgrade, security correlation agent update, and security report.

Upon security attack processing, the security correlation agent generates and transmits a message to the security correlation server when detecting a virus. When determining that the mobile terminal is an insecure mobile terminal, the security correlation server establishes and implements security strategies corresponding to the levels of the security services subscribed to by the subscribers, and makes security logs in different details according to the security service levels of the subscribers. The security correlation server implements the strategies differentially step by step according to the established security strategies to be differentially treated, for example:

1) performing various flow control by determining an attack is directed to a specific type of service according to the type of virus or attack. Differential treatment refers to implementing various control methods for a differential strategy. For example, for a subscriber who has subscribed to a security service of higher level, in addition to general redirection, a redirection function based on a flow stream analysis of protocols and states may be provided to assist the subscriber in quick virus detection and clearing without affecting the normal implementation of the subscriber's service as far as possible.

2) judging whether the processing is appropriate. If according to the evaluation results of the security correlation information of the mobile terminals, it is judged that the threats can not be controlled with only the network access control, an application access control method will be initiated, including service disabling, service limiting, etc.

Upon security update such as virus library upgrade, system loophole upgrade and system security configuration, the security correlation agent generates and transmits a mobile terminal security state message to the security correlation server at the network side when detecting that upgrade or update is needed. The security correlation server establishes and implements security strategies corresponding to the levels of the security services subscribed to by the subscribers, and makes security logs in different details according to the security service levels of the subscribers. The security correlation server implements the strategies differentially step by step according to the established security strategies to be differentially treated, for example:

1) arranging preferentially for update such as virus library upgrade for a higher-level subscriber, according to the conditions of the network resources, including the security correlation server performing correlative reacting with an anti-virus server and assisting the subscriber in implementing the update or configuration; if the network resources are not sufficient, it is possible that the security update will be delayed for a lower-level subscriber.

2) if necessary, the security correlation server may initiate both a network access control process and a corresponding application service control process. Likewise, in this implementation process, there may be a differential provision according to the level of the security service subscribed to by the subscriber. The specific implementation follows the security strategy established for the subscriber by the security correlation server. If the network resources are not enough, it is possible that stricter access control and service limiting will be implemented for a lower-level subscriber.

When a security correlation agent needs to be updated, the security correlation server implements the update process of the version of the security correlation agent step by step according to subscriber level, from a higher level to a lower level, and conditions of the network resources. For a subscriber with a lower security service level, it is possible that the update service will be delayed, and that the quality of the application service will be degraded.

In terms of security report, a detailed report for related information will be provided from the network side if a subscriber who has subscribed to a high-level security service requests.

Another specific application of the correlative reacting between a terminal and a server according to an embodiment of the present invention is preventing junk mails. In the methods and systems for preventing junk mails according to embodiments of the present invention, junk mail filtering rules are established by using junk mail configuration information transmitted from a client to a server, with which junk mails can be prevented more completely and accurately.

In an embodiment of the present invention, a client reports the configuration information of a received junk mail to an associated server, which establishes a junk mail filtering strategy according to the junk mail configuration information, such that when the server receives e-mails from the network, a junk mail can be filtered out of the e-mails according to the filtering strategy as established.

### Example 1

Fig. 16 shows a schematic diagram illustrating the networking architecture according to example 1 of the present invention. The system for preventing junk mails includes:

a mail server 870 for receiving e-mails from the network and storing the received e-mails temporally;

a network access device 830 for forwarding the e-mails transmitted from a client 810 to the mail server 870, and forwarding the e-mails received by the mail server 870 to a designated client, which may be a broadband access device in a wired communication system, or a wireless data supporting node in a wireless communication system;

at least one client 810 connected with the mail server 870 through the network access device 830, which may be a mobile client or a fixed client; a mail detecting unit 880 and a configuration information obtaining unit 813 being provided at the client side in an embodiment of the present invention;

a security correlation server 820 connected with the network access device 830, including a configuration information storing unit 822 and a configuration information processing unit 823, for receiving and storing the configuration information transmitted from the configuration information obtaining unit 813, establishing a junk mail filtering strategy according to the configuration information and controlling the network access device 830 to filter out a junk mail received from the network by the mail server 870 with the filtering strategy.

The mail detecting unit 880 at the client side may be a functional module provided within the client, or an independent entity in the system, which is used to detect the mails received by the client 810, and identify a junk mail therefrom. The configuration information obtaining unit 813 connected with the mail detecting unit 880 via a communication interface is generally provided within the client 810, which is used to obtain the configuration information of the junk mail detected by the mail detecting unit 880 and transmit the same to the network access device 830.

The configuration information storing unit 822 in the security correlation server 820 receives the configuration information transmitted from the configuration information obtaining unit 813 in an interruption or inquiry way and stores the same; the configuration information processing unit 823 reads the junk mail configuration information from the configuration information storing unit 822 in an interruption or inquiry way, establishes or updates in real time the junk mail filtering strategy according to the junk mail configuration information and controls the network access device 830 to filter out a junk mail received from the network by the mail server 870 with the filtering strategy.

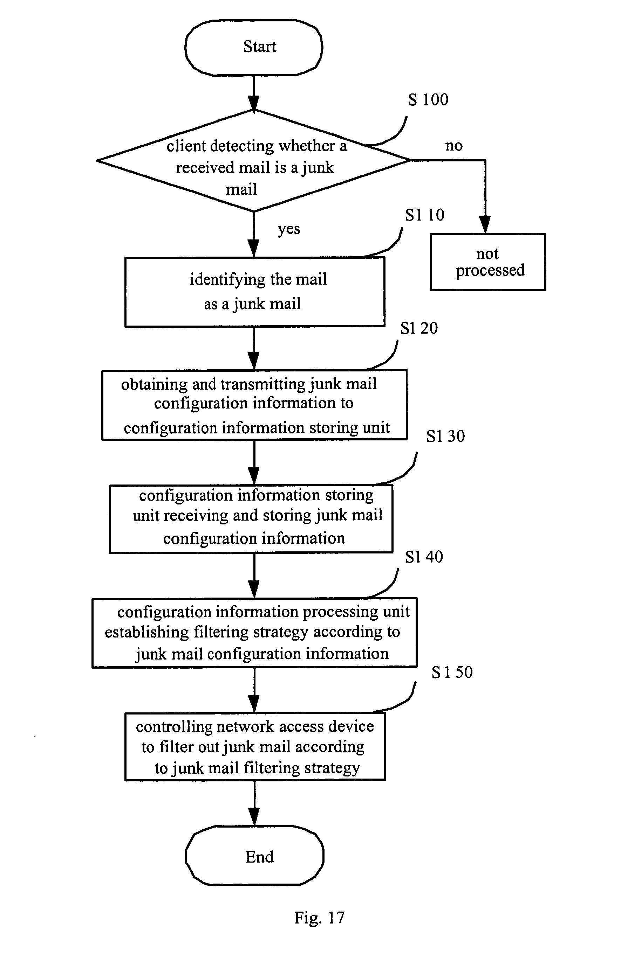

Fig. 17 is a flow chart of preventing junk mails with the system shown in Fig. 16, the main implementation process of which is as follows.

In step S100, the client detects whether a received e-mail is a junk mail through the mail detecting unit. If it is, step S110 is performed to identify the mail as a junk mail and then step S 120 is performed; otherwise, the mail is not processed.

The filtering rules are configured on the mail detecting unit for checking and matching subsequent e-mails. The filtering rules may be established according to information items such as a source address, a subject of mail, a key word in the text. For example, a mail having a key word "promotion" in the text may be filtered out.

In step S120, the configuration information obtaining unit obtains the configuration information of a mail with a junk mail identification and transmits the configuration information to the configuration information storing unit in the security correlation server through the network access device.

The configuration information of a junk mail includes at least one of the source address/destination address, a key word of the subject, and a key word of the content of the mail.

In step S130, the configuration information storing unit receives the junk mail configuration information outputted from the configuration information obtaining unit in an interruption or inquiry way and stores the received junk mail configuration information.

In step S140, the configuration information processing unit reads the junk mail configuration information from the configuration information storing unit in an interruption or inquiry way, and establishes or updates in real time the junk mail filtering strategy according to the junk mail configuration information.

For example, since junk mails are generally sent in group, junk mail blocking levels may be set in the configuration information processing unit according to the number of the clients reporting the same source address, in which the mail transferred from the address to only this client is blocked for the lowest level, and the mail transferred from the address to all the clients is blocked for the highest level.

In step S150, the configuration information processing unit controls the network access device to filter out a junk mail received from the network by the mail server with the junk mail filtering strategy.

Under the control of the configuration information processing unit, the network access device performs corresponding processing on the source address or port of the junk mail according to the junk mail filtering strategy so as to filter out a junk mail received from the network by the mail server.

### Example 2

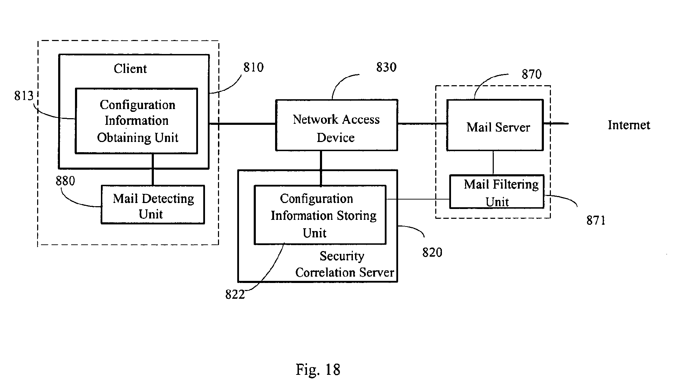

Fig. 18 shows a schematic diagram illustrating the networking architecture according to example 2 of the present invention. The system for preventing junk mails includes:

a mail server 870 for receiving e-mails from the network and storing the received e-mails temporally;

a network access device 830 for forwarding the e-mails transmitted from a client 810 to the mail server 870, and forwarding the e-mails received by the mail server 870 to a designated client;

at least one client 810 connected with the mail server 870 through the network access device 830; a mail detecting unit 880 and a configuration information obtaining unit 813 being provided at the client side in an embodiment of the present invention;

a security correlation server 820 connected with the network access device 830, having a configuration information storing unit 822 therein, for receiving and storing the configuration information transmitted from the configuration information obtaining unit 813;

a mail filtering unit 871 connected with the security correlation server 820, which may be provided in the mail server 870 or connected with the mail server 870 via a communication interface, for establishing or updating a junk mail filtering strategy according to the junk mail configuration information outputted from the security correlation server 820 and filtering out a junk mail received from the network with the filtering strategy.

The mail detecting unit 880 at the client side may be provided within the client, or be an independent entity in the system, which is used to detect the mails received by the client 810 and identify a junk mail therefrom. The configuration information obtaining unit 813 connected with the mail detecting unit 880 via a communication interface is generally provided within the client 810, which is used to obtain the configuration information of the junk mail detected by the mail detecting unit 880 and transmit the same to the network access device 830.

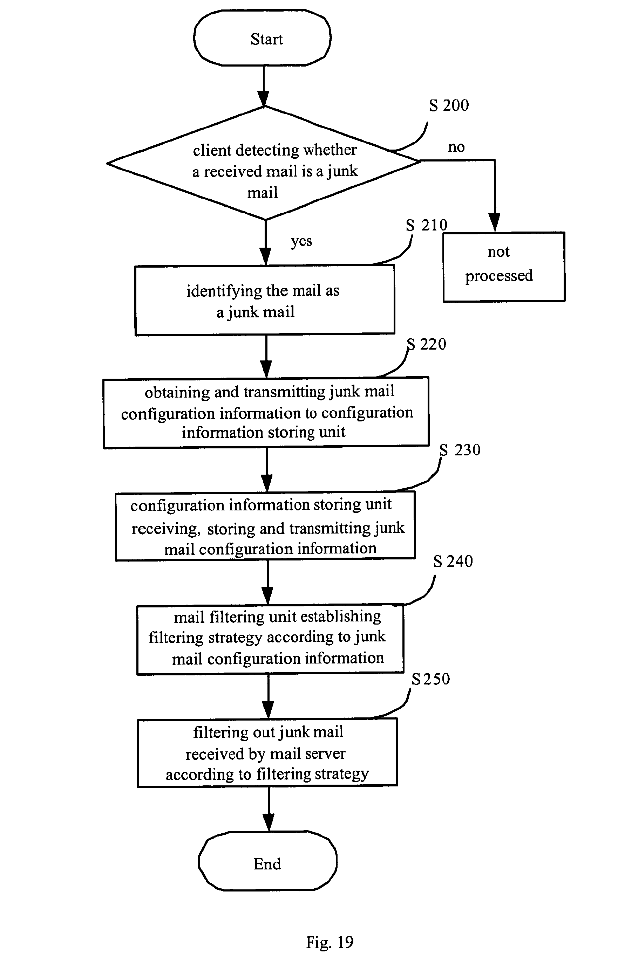

Fig. 19 is a flow chart of preventing junk mails with the system shown in Fig. 18, the main implementation process of which is as follows.

In step S200, the client detects whether a received e-mail is a junk mail through the mail detecting unit. If it is, step S210 is performed to identify the mail as a junk mail and then step S220 is performed; otherwise, the mail is not processed.

The filtering rules are configured on the mail detecting unit for checking and matching subsequent e-mails. The filtering rules may be established according to information items such as a source address, a subject of mail, a key word in the text.

In step S220, the configuration information obtaining unit obtains the configuration information of a mail with a junk mail identification and transmits the configuration information to the configuration information storing unit through the network access device.

The configuration information of a junk mail includes at least one of the source address/destination address, a key word of the subject, and a key word of the content of the mail.

In step S230, the configuration information storing unit receives the junk mail configuration information outputted from the configuration information obtaining unit in an interruption or inquiry way and stores the same.

In step S240, the mail filtering unit reads the junk mail configuration information from the configuration information storing unit in an interruption or inquiry way, and establishes or updates in real time the junk mail filtering strategy according to the configuration information.

For example, the mail filtering unit may add the source address of the junk mail reported by the client into a black list, or add a key word of the subject of the junk mail as a filtering rule.

In step S250, the mail filtering unit identifies a junk mail from the e-mails received from the network by the mail server with the junk mail filtering strategy and filters out the identified junk mail.

### Example 3

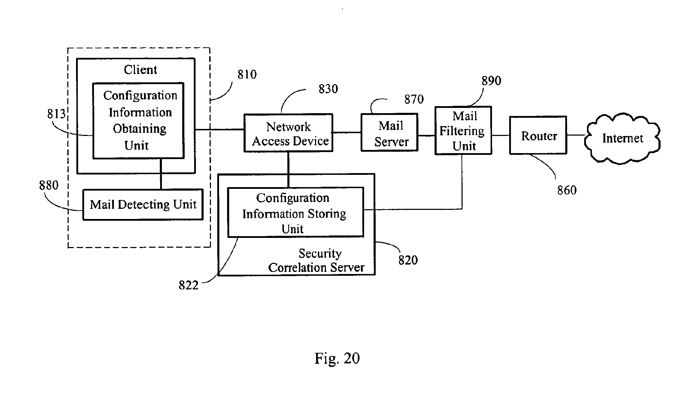

Fig. 20 shows a schematic diagram illustrating the networking architecture according to example 3 of the present invention. The system for preventing junk mails includes:

a mail server 870 for receiving e-mails from the network and storing the received e-mails temporally;

a network access device 830 for forwarding the e-mails transmitted from a client 810 to the mail server 870, and forwarding the e-mails received by the mail server 870 to a designated client;

at least one client 810 connected with the mail server 870 through the network access device 830; a mail detecting unit 880 and a configuration information obtaining unit 813 being provided at the client side in an embodiment of the present invention;

a security correlation server 820 connected with the network access device 830, having a configuration information storing unit 822 therein, for receiving and storing the configuration information transmitted from the configuration information obtaining unit 813;

a mail filtering unit 890 with a conventional mail filtering ability, connected between the mail server 870 and an Internet router 860, and connected with the security correlation server 820, for establishing or updating a junk mail filtering strategy according to the junk mail configuration information outputted from the security correlation server 820 and filtering out a junk mail received from the network with the filtering strategy.

The mail detecting unit 880 at the client side may be provided within the client, or be an independent entity in the system, which is used to detect the mails received by the client 810 and identify a junk mail therefrom. The configuration information obtaining unit 813 connected with the mail detecting unit 880 via a communication interface is generally provided within the client 810, which is used to obtain the configuration information of the junk mail detected by the mail detecting unit 880 and transmit the same to the network access device 830.

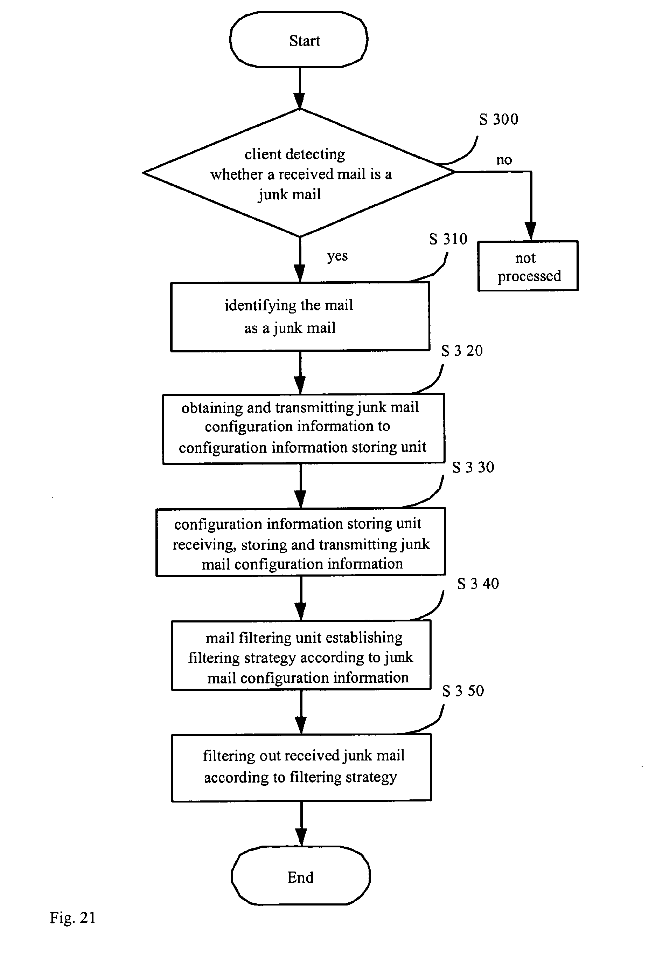

Fig. 21 is a flow chart of preventing junk mails with the system shown in Fig. 20, the main implementation process of which is as follows.

In step S300, the client detects whether a received e-mail is a junk mail through the mail detecting unit. If it is, step S310 is performed to identify the mail as a junk mail and then step S320 is performed; otherwise, the mail is not processed.

The filtering rules are configured on the mail detecting unit for checking and matching subsequent e-mails. The filtering rules may be established according to information items such as a source address, a subject of mail, a key word in the text.

In step S320, the configuration information obtaining unit obtains the configuration information of a mail with a junk mail identification and transmits the configuration information to the configuration information storing unit through the network access device.

The configuration information of a junk mail includes at least one of the source address/destination address, a key word of the subject, and a key word of the content of the mail.

In step S330, the configuration information storing unit receives the junk mail configuration information outputted from the configuration information obtaining unit in an interruption or inquiry way and stores the same.

In step S340, the mail filtering unit reads the junk mail configuration information from the configuration information storing unit in an interruption or inquiry way, and establishes or updates the junk mail filtering strategy according to the configuration information.

In step S350, the mail filtering unit filters out a junk mail from the e-mails received from the network according to the junk mail filtering strategy.

The methods and systems for preventing junk mails according to the embodiments of the present invention may be combined with any other means for preventing junk mails in the prior art such that the whole regime for preventing junk mails can both receive normal mails more effectively and prevent the transmission of the junk mails to a greater extent.

What described above are just preferred embodiments of the present invention, which are not intended to limit the scope of the invention. Any modification, substitution and improvements made within the scope and spirit of the invention should be included in the scope of the invention.

## Claims

1. A method for network security control, comprising:
collecting, by at least one terminal device, local security correlation information and reporting the same to a server;
receiving and parsing, by the server, the security correlation information, and obtaining a security strategy corresponding to the result of the parsing;
performing, by the server, network access control and/or service access control on a terminal device via a network access device by using the security strategy.

2. The method for network security control according to Claim 1, further comprising:
transmitting, by the server, to a security device within the network the security correlation information reported by the terminal devices, and making, by the security device, a security response according to the security correlation information so as to implement security protection of the network.

3. The method for network security control according to Claim 1, wherein collecting local security correlation information comprises: collecting local security configuration information and/or security event information.

4. The method for network security control according to Claim 3, wherein when the security correlation information collected by a terminal device contains the security event information, the terminal device filters the security event information as collected according to preconfigured filtering rules and reports the remaining security event information after the filtering to the server.

5. The method for network security control according to Claim 3, wherein the security configuration information comprises system security configuration information and application security configuration information; and the security event information comprises virus event information, attack event information and illegal scan information.

6. The method for network security control according to Claim 1, wherein the server receives the security correlation information in an interruption or inquiry way.

7. The method for network security control according to Claim 1, further comprising:
providing, by the server, a security service for a terminal device based on the security strategy.

8. The method for network security control according to Claim 7, wherein providing a security service comprises: performing security attack processing, performing security configuration updating or providing a security report.

9. The method for network security control according to any of Claims 1 to 8, wherein receiving and parsing the security correlation information comprises: making a comprehensive analysis on the security correlation information reported by at least two terminal devices.

10. The method for network security control according to any of Claims 1 to 8, wherein obtaining a security strategy corresponding to the result of the parsing comprises determining a security strategy corresponding to each terminal device in combination with the security service level of a security service subscribed to by a subscriber.

11. A system for network security control, comprising at least one terminal device, a network access device connected therewith, and a security correlation server connected with the network access device, and further comprising:
security correlation agents provided at the terminal device side, for collecting security correlation information of the terminal device and reporting the security correlation information to the security correlation server;
wherein the security correlation server is for receiving and parsing the security correlation information reported by the security correlation agents, obtaining a security strategy corresponding to the result of the parsing, and performing network access control and/or application service access control on a terminal device via the network access device by using the security strategy.

12. The system for network security control according to Claim 11, wherein the security correlation server parses the security correlation information reported by the security correlation agents, by making a comprehensive analysis on the security correlation information reported by the security correlation agents of at least two terminal devices.

13. The system for network security control according to Claim 11, further comprising:
a security device connected with the security correlation server, for obtaining the security correlation information from the security correlation server, making a corresponding security response and implementing security protection of the network.

14. The system for network security control according to Claim 11, wherein the security correlation agent comprises:
a configuration information obtaining subunit for collecting and transmitting security configuration information of the terminal device to the security correlation server.

15. The system for network security control according to Claim 14, wherein the security configuration information collected by the configuration information obtaining subunit comprises system security configuration information and application security configuration information.

16. The system for network security control according to Claim 14, wherein the security correlation agent further comprises:
an event information obtaining subunit for collecting security event information of the terminal device;
an event information filtering subunit connected with the event information obtaining subunit, for filtering the security event information as collected according to preconfigured filtering rules and reporting the remaining security event information after the filtering to the security correlation server.

17. The system for network security control according to Claim 11, wherein the security correlation agent comprises:
an event information obtaining subunit for collecting security event information of the terminal device;
an event information filtering subunit connected with the event information obtaining subunit, for filtering the security event information as collected according to preconfigured filtering rules and reporting the remaining security event information after the filtering to the security correlation server.

18. The system for network security control according to Claim 16 or 17, wherein the security event information collected by the event information obtaining subunit comprises virus event information, attack event information and illegal scan information.

19. The system for network security control according to Claim 11, wherein the security correlation agent is a functional module provided within the terminal device, or an independent functional entity in the system.

20. The system for network security control according to Claim 11, wherein the security correlation server comprises a database recording the security service level of a security service subscribed to by a subscriber; wherein the security correlation server obtains a security strategy corresponding to the result of the parsing by determining a security strategy corresponding to each terminal device in combination with the security service level of a security service subscribed to by a subscriber.

21. The system for network security control according to Claim 20, wherein the security correlation server and the security correlation agent provide a security service for a terminal device based on the security strategy corresponding to the terminal device.

22. The system for network security control according to Claim 20 or 21, wherein the security service comprises security attack processing, security configuration updating or a security report.

23. A method for preventing junk mails, comprising:
reporting, by a client, the configuration information of a received junk mail to an associated server;
receiving and parsing, by the server, the configuration information, and establishing a junk mail filtering strategy according to the result of the parsing;
filtering out, by the server, a junk mail received from the network according to the filtering strategy.

24. The method for preventing junk mails according to Claim 23, wherein the reporting the configuration information of a received junk mail to an associated server comprises reporting at least one of the source address/destination address, a key word of the subject and a key word of the content of the junk mail to the associated server.

25. The method for preventing junk mails according to Claim 23 or 24, wherein the server receives the configuration information in an interruption or inquiry way.

26. The method for preventing junk mails according to Claim 23, wherein the method further comprises: updating, by the server, the junk mail filtering strategy in real time according to the configuration information of the junk mail reported by the client.

27. A system for preventing junk mails, comprising a mail server and at least one client connected with the mail server via a network access device, and further comprising:
a configuration information obtaining unit provided in the client, for obtaining and transmitting configuration information of a junk mail received by the client;
a security correlation server connected with the network access device, for receiving and storing the configuration information transmitted from the configuration information obtaining unit, establishing or updating a junk mail filtering strategy according to the configuration information, and controlling the network access device to filter out a junk mail received from the network by the mail server according to the filtering strategy.

28. The system for preventing junk mails according to Claim 27, wherein the security correlation server comprises:
a configuration information storing unit, for receiving and storing the configuration information transmitted from the configuration information obtaining unit;
a configuration information processing unit connected with the configuration information storing unit, for obtaining the configuration information from the configuration information storing unit, establishing or updating a junk mail filtering strategy according to the configuration information, and controlling the network access device to filter out a junk mail received from the network by the mail server according to the filtering strategy.

29. The system for preventing junk mails according to Claim 28, wherein the configuration information storing unit receives the configuration information of a junk mail from the configuration information obtaining unit in an interruption or inquiry way;
the configuration information processing unit reads the configuration information of a junk mail from the configuration information storing unit in an interruption or inquiry way.

30. The system for preventing junk mails according to Claim 27, further comprising:
a mail detecting unit connected with the configuration information obtaining unit, for detecting the mails received by the client and identifying a junk mail therefrom.

31. The system for preventing junk mails according to Claim 30, wherein the mail detecting unit is provided within the client, or is an independent entity in the system.

32. A system for preventing junk mails, comprising a mail server and at least one client connected with the mail server via a network access device, and further comprising:
a configuration information obtaining unit provided in the client, for obtaining and transmitting configuration information of a junk mail received by the client;
a security correlation server connected with the network access device, for receiving and storing the configuration information of the junk mail transmitted from the configuration information obtaining unit;
a mail filtering unit connected with the security correlation server, for establishing or updating a junk mail filtering strategy according to the configuration information of the junk mail outputted by the security correlation server, and filtering out a junk mail received from the network according to the filtering strategy.

33. The system for preventing junk mails according to Claim 32, wherein the mail filtering unit is provided in the mail server or connected with the mail server via a communication interface.

34. The system for preventing junk mails according to Claim 32, wherein the mail filtering unit is connected between the mail server and an Internet router.

35. The system for preventing junk mails according to Claim 32, wherein the client comprises:
a mail detecting unit connected with the configuration information obtaining unit, for detecting the mails received by the client and identifying a junk mail therefrom.

36. The system for preventing junk mails according to Claim 35, wherein the mail detecting unit is provided within the client, or is an independent entity in the system.

37. The system for preventing junk mails according to Claim 32, wherein, the security correlation server obtains the configuration information of a junk mail from the configuration information obtaining unit in an interruption or inquiry way;
the mail filtering unit obtains the configuration information of a junk mail from the security correlation server in an interruption or inquiry way.
